## Europäisches Patentamt
## European Patent Office
## Office européen des brevets

(19)

(11) Veröffentlichungsnummer: **0 103 174**
**B1**

(12) # EUROPÄISCHE PATENTSCHRIFT

(45) Veröffentlichungstag der Patentschrift:
25.02.87

(51) Int. Cl.⁴: **C 08 G 18/08,** C 08 G 18/10

(21) Anmeldenummer: **83107942.1**

(22) Anmeldetag: **11.08.83**

(54) **Verfahren zur Herstellung von vernetzten Polyurethan-Ionomerdispersionen.**

(30) Priorität: **10.09.82 DE 3233605**

(43) Veröffentlichungstag der Anmeldung:
**21.03.84 Patentblatt 84/12**

(45) Bekanntmachung des Hinweises auf die Patenterteilung:
**25.02.87 Patentblatt 87/9**

(84) Benannte Vertragsstaaten:
**AT BE CH DE FR GB IT LI NL**

(56) Entgegenhaltungen:
**EP-A-0 044 460**
**EP-A-0 073 392**
**AT-B-341 218**
**DE-A-1 495 745**
**DE-A-1 595 636**
**US-A-4 381 332**

(73) Patentinhaber: **BASF Aktiengesellschaft, Carl-Bosch- Strasse 38, D-6700 Ludwigshafen (DE)**

(72) Erfinder: **Stutz, Herbert, Dr., Schneidemuehler Strasse 9c, D-7500 Karlsruhe 1 (DE)**
Erfinder: **Eckert, Guenter, Dr., Flossbachstrasse 1, D-6703 Limburgerhof (DE)**

EP 0 103 174 B1

LIBER, STOCKHOLM 1987

**Beschreibung**

Die Erfindung betrifft ein Verfahren zur Herstellung von vernetzten Polyurethan-Ionomerdispersionen, aus denen sich Überzüge mit verbesserten Eigenschaften, insbesondere verminderter Temperaturempfindlichkeit und erhöhter Erweichungstemperatur, herstellen lassen.

Die Herstellung emulgatorfreier, wäßriger Polyurethandispersionen durch Einbau ionischer Zentren in das Polymermolekül, Lösen in einem wasserhaltigen organischen Lösungsmittel und Entfernen des organischen Lösungsmittels ist bekannt und beispielsweise in der DE-PS 1 495 745 beschrieben.

Dabei wird üblicherweise zunächst aus vorzugsweise linearen höhermolekularen Dihydroxylverbindungen, Diisocyanaten und niedermolekularen Kettenverlängerungsmitteln in einem mit Wasser mischbaren, unter 100° C siedenden organischen Lösungsmittel ein isocyanatgruppenhaltiges Präpolymeres hergestellt, das mit einem ionischen Kettenverlängerungsmittel mit zwei coreaktiven Gruppen, im allgemeinen Hydroxyl- oder Aminogruppen, und einer Salzgruppe bzw. mit einer in ein Salz überführbaren Gruppe umgesetzt wird. In die Lösung dieses ionisch modifizierten Polyurethans wird dann Wasser eingerührt und das organische Lösungsmittel abgedampft. Auf diese Weise können sowohl kationische als auch anionische Dispersionen hergestellt werden.

Auf diese Weise erhaltene Produkte werden wegen ihrer guten Eigenschaften auf einigen Gebieten in technischem Maßstab eingesetzt. Sie weisen jedoch noch gewisse Mängel auf, welche eine breitere Anwendung einschränken. So ist z.B. das Verhalten von daraus hergestellten Überzügen bei erhöhten Temperaturen häufig unbefriedigend, da sie schnell erweichen und zu kleben beginnen.

Weiter ist es aus der DE-PS 1 282 962 und der DE-OS 20 35 730 bekannt, wäßrige Polyurethan-Suspensionen von fasrigen, vernetzten Teilchen durch Umsetzen polyfunktioneller NCO-Gruppen tragender Präpolymerer mit Polyaminen in wäßrigem Medium unter starkem Rühren herzustellen. Diese Suspensionen sind jedoch nicht filmbildend und die darin enthaltenen Teilchen können nur noch bei hohen Temperaturen miteinander verschweißt werden. Die Suspensionen sind deshalb nur für spezielle Anwendungen, z.B. für Heißsiegelverklebungen verwendbar. In der NL-Patentanmeldung 74 06 798 wird schließlich ein Verfahren zur Herstellung von Dispersionen aus vernetzten Polyurethanen beschrieben, bei dem verzweigte Polyester mit Isophorondiisocyanat, niedermolekularen Kettenverlängerungsmitteln und Alkalisalzen von Monoaminosäuren umgesetzt werden. Dieses Verfahren ist jedoch ebenfalls unbefriedigend, da es schlecht reproduzierbar ist und zu Produkten führt, die schwankende Eigenschaften aufweisen.

Es wurde nun gefunden, daß man wäßrige Dispersionen von vernetzten Polyurethan-Ionomeren durch Umsetzen von Isocyanatgruppen tragenden Präpolymeren mit polyfunktionellen Verbindungen mit Vorteil herstellen kann, indem man Salzgruppen eingebaut enthaltende Polyurethan-Präpolymere mit aliphatisch und/oder cycloaliphatisch gebundenen Isocyanat-Gruppen in einem mit Wasser mischbaren organischen Lösungsmittel eines Siedepunktes zwischen 20 und 100° C mit polyfunktionellen Polyisocyanaten vermischt, die erhaltene Lösung in Wasser dispergiert und das organische Lösungsmittel abdampft. Beim Vermischen der Lösung von Isocyanat-Endgruppen aufweisenden Polyurethan-Präpolymeren und der niedermolekularen Polyisocyanate mit Wasser reagiert das Wasser mit den Isocyanatgruppen der Präpolymeren und der niedermolekularen Polyisocyanate unter Vernetzung. Dies ist überraschend, da zu erwarten war, daß die Reaktion mit Wasser zu raschem Kettenabbruch und zur überwiegenden Bildung niedermolekularer Produkte führen würde.

Für das neue Verfahren werden Salzgruppen eingebaut enthaltende Polyurethan-Präpolymere mit aliphatisch und/oder cycloaliphatisch gebundenen Isocyanat-Gruppen eingesetzt. Diese Polyurethan-Präpolymere sollen vorzugsweise einen Isocyanatgehalt von 0,1 bis 2 Gew.% aufweisen. Sie können im allgemeinen aus Polyhydroxylverbindungen mit Molekulargewichten von 800 bis 5000, vorzugsweise von 800 bis 3000, organischen Diisocyanaten und gegebenenfalls niedermolekularen Kettenverlängerungsmitteln mit Molekulargewichten unter 500 hergestellt sein. Die Präpolymeren sollen vorzugsweise 0,02 bis 1 Gew.% salzartige Gruppen eingebaut enthalten.

Zur Herstellung der Präpolymeren geeignete höhermolekulare Polyhydroxylverbindungen sind alle üblichen Polyester, Polyether, Polyetherester, Polythioether, Polylactone, Polyacetale, Polyesteramide und Polyamide mit Molekulargewichten zwischen 800 und 5000, wobei der Bereich zwischen 800 und 3000 besonders vorteilhaft ist. Sie sind im allgemeinen überwiegend linear und somit im hinblick auf eine Isocyanataddition difunktionell. Sie können für sich oder im Gemisch untereinander oder auch nacheinander mit den Polyisocyanaten in üblicher Weise umgesetzt werden.

Geeignete Polyester mit endständigen Hydroxylgruppen können beispielsweise aus Dicarbonsauren mit 2 bis 12 C-Atomen, vorzugsweise 4 bis 8 C-Atomen und mehrwertigen Alkoholen hergestellt sein. Die Dicarbonsäuren können aliphatischer, cycloaliphatischer, aromatischer und/oder heterocyclischer Natur sein, sie können gegebenenfalls Heteroatome enthalten, z.B. durch Halogenatome substituiert und/oder olefinisch ungesättigt sein.

Geeignete Dicarbonsäuren sind z.B. aliphatische Dicarbonsäuren, wie Bernsteinsäure, Glutarsäure, Adipinsäure, Korksäure, Azelainsäure und Sebacinsäure, cycloaliphatische Dicarbonsäuren, wie Hexahydrophthalsäure oder Endomethylentetrahydrophthalsäure, aromatische Dicarbonsäuren, wie Phthalsäure, Isophthalsäure, Terephthalsäure, Naphthalindicarbonsäure, Tetrachlorphthalsäure, ungesättigte Dicarbonsäuren, wie Malein- und Fumarsäure und dimere Fettsäuren.

Auch Dicarbonsäuren können einzeln oder als Gemische oder nacheinander eingesetzt sein. Zur Herstellung

2

**0 103 174**

der hydroxylgruppenhaltigen Polyester kann es gegebenenfalls vorteilhaft sein, anstelle der freien Carbonsäuren Carbonsäurederivate, z.B. Carbonsäureester mit 1 bis 4 C-Atomen im Alkoholrest, Carbonsäureanhydride oder Carbonsäurechloride zu verwenden. Gegebenenfalls können auch cyclische Lactone mitverwendet werden.

Beispiele für mehrwertige Alkohole sind Diole mit 2 bis 16 C-Atomen, vorzugsweise 2 bis 6 C-Atomen, welche gegebenenfalls Heteroatome enthalten, ungesättigt sein und/oder substituiert sein können, wie Ethylenglykol, Propylenglykol-1,2 und -1,3, Butan-diol-1,3, -1,4 und -2,3, Pentandiol-1,5, Hexandiol-1,6, Octandiol-1,8, Decandiol-1,10, Neopentylglykol, 2-Methylpropandiol-1,3, 3-Methylpentandiol-1,5, Diethylenglykol, Dipropylenglykol oder Dibutylenglykol und deren Homologe mit Molekulargewichten bis etwa 1000. Ferner können geringe Mengen an Aminoalkoholen oder Diaminen mitverwendet sein, z.B. Ethanolamin, N-Methylethanolamin, geringe Mengen an polyfunktionellen, vorzugsweise trifunktionellen Alkoholen, wie besonders Glycerin, Trimethylolpropan und Hexantriol.

Auch mehrwertige Alkohole der genannten Art können für sich oder in beliebigen Mischungen untereinander oder nacheinander eingesetzt sein. Geeignet sind ferner hydroxylgruppenhaltige Polyester der Kohlensäure mit den obengenannten Diolen, insbesondere solchen mit 4 bis 6 C-Atomen, wie Butandiol und/oder Hexandiol sowie Polymerisationsprodukte von cyclischen Lactonen, wie gegebenenfalls substituierte ε-Caprolactone.

Geeignete höhermolekulare hydroxylgruppenhaltige Polyether sind die üblichen Polymerisationsprodukte von Epoxiden, wie Ethylenoxid, Propylenoxid, Butylenoxid, Epichlorhydrin oder ferner Styroloxid, die in Gegenwart von Lewis-Säuren, wie $BF_3$, hergestellt sind oder Anlagerungsprodukte dieser Epoxide, gegebenenfalls in beliebigen Gemischen untereinander oder nacheinander, an di- und/oder trifunktionelle Startermoleküle, wie Wasser, Ammoniak oder Amine, z.B. Anilin oder vorzugsweise mehrwertige Alkohole, wie Ethylenglykol, Propylenglykol, Butandiol, Glycerin, Trimethylolpropan, Hexantriol, Hydrochinon, Cyclohexandiol, 4,4-Dihydroxydiphenyl-propan oder 4,4'-Dihydroxydicyclohexylpropan. Geeignet sind ferner Polymerisationsprodukte von cyclischen Ethern, z.B. Tetrahydrofuran, Hexamethylenoxid oder Octamethylenoxid sowie Hydroxylgruppen aufweisende Polybutadiene,

Als Polyacetale kommen vorzugsweise wasserunlösliche Formale, z.B. Polybutandiolformal oder -hexandiolformal, in Betracht. Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen genannt. Je nach den Co-Komponenten erhält man dabei Polythiomischether, Polythioetherester oder Polythioetheresteramide.

Zur Herstellung der Präpolymeren geeignete Diisocyanate sind alle bekannten und üblichen aliphatischen, cycloaliphatischen, aromatischen und aliphatisch-aromatischen Diisocyanate, z.B. Butan-1,4-diisocyanat, Hexan-1,6-diisocyanat, 2,2,4- und 2,4,4-Trimethylhexamethylendiisocyanat, Dimeryldiisocyanat, Lysinesterdiisocyanat, Cyclohexandiisocyanat, Methylcyclohexandiisocyanat, Isophorondiisocyanat, Xylylendiisocyanat, Dicyclohexylmethandiisocyanat, Diphenylmethandiisocyanat, Diphenylethandiisocyanat, 2,4- und 2,6-Toluoldiisocyanat und deren technische Isomerengemische, Naphthalin-1,5-diisocyanat, Diphenyldiisocyanat, 3,3-Dimethyl-4,4'-diisocyanato-diphenyl, Phenylcyclohexylmethandiisocyanat und Phenylethyldiisocyanat. Die genannten Diisocyanate konnen für sich oder im Gemisch miteinander oder nacheinander eingesetzt werden. Erfindungswesentlich ist jedoch, daß die Präpolymeren (cyclo-)aliphatische Endgruppen aufweisen. Aromatische Diisocyanate dürfen deshalb nicht alleine, sonderen entsprechend den Angaben der DE-PS 2 645 779 nur in Kombination mit aliphatischen oder cycloaliphatischen Diisocyanaten eingesetzt werden. Der molare Anteil der aromatischen Diisocyanate an der Gesamtmenge aller eingesetzten Diisocyanate kann bis 90 % betragen, bevorzugt werden nicht mehr als 70 % aromatische Diisocyanate eingesetzt.

Geeignete niedermolekulare Kettenverlängerungsmittel ohne Salzgruppen und mit Molekulargewichten unter 500 für die Herstellung der Präpolymeren sind die üblichen Glykole, z.B. Ethylenglykol, Propylenglykol, 1,4-Butan-diol, Pentandiol, 1,6-Hexandiol, Neopentylglykol, Cyclonexandiol, 2,2-Bis-(4-hydroxyethoxyphenyl)propan, alkoxylierte Produkte des Hydrochinons, Diethylen- oder Dipropylenglykol, Diamine wie Hydrazin, Ethylendiamin, Propylendiamin, Butandiamin, Hexamethylendiamin, Piperazin, Isophorondiamin, Cyclohexandiamin, Diaminodicyclohexylmethan, Toluoldiamin, Diaminodiphenylmethan sowie Aminoalkohole und Wasser.

Die Einführung von Salzgruppen in das Präpolymere kann grundsätzlich über alle zu seinem Aufbau verwendeten Komponenten erfolgen, es ist jedoch vorteilhaft, anteilig Kettenverlängerungsmittel mit einer Salzgruppe oder einer in ein Salz überführbaren Gruppe sowie zwei mit Isocyanat reaktiven Gruppen mitzuverwenden, wie dies z.B. aus der DE-PS 1 495 745 bekannt ist. Es sind dies vorzugsweise Carboxylat- und Sulfonatgruppen oder quartäre Stickstoffatome enthaltende Diole oder Diamine. Beispiele hierfür sind für die Herstellung kationischer Dispersionen z.B. tertiäre Aminoverbindungen wie N-Methyldiethanolamin und N-Methyldiethylentriamin. Diese können vor oder nach Einbau in das Präpolymere mit Säuren neutralisiert oder mit Alkylierungsmitteln quaternisiert werden. Für die Herstellung anionischer Dispersionen kommen im wesentlichen die Alkali- oder Ammoniumsalze von Dihydroxy- bzw. Diaminocarbon- oder -sulfonsäuren in Betracht. Besonders geeignet sind Diaminocarbon- und -sulfonsauren, wie Lysin, oder die Additionsprodukte von aliphatischen di-primären Diaminen, wie Ethylendiamin, an ungesättigte Carbonsäuren bzw. deren Salze, wie (Meth)Acrylsäure, Crotonsäure oder Maleinsäure. Sulfonatgruppenhaltige Diamine können z.B. auf analoge Weise aus Diaminen und Acrylamidpropansulfosäure, durch Addition von Propansulton an Diamine oder aus Taurin an verschiedene Stickstoffatome gebundenen Wasserstoffatomen sowie mit nur einer Salzgruppe im Molekül eingesetzt, also Verbindungen, die das Produkt zwar dispergierbar, aber nicht zu stark hydrophil machen und die außerdem zur Kettenverlängerung geeignet sind. Sie werden im allgemeinen in solchen Mengen angewandt, daß die fertige Polyurethanmasse 0,02 bis 1 Gew.% salzartige Gruppen enthält.

Die höhermolekularen Polyhydroxylverbindungen, Diisocyanate und niedermolekularen Kettenverlängerungsmittel ohne Salzgruppen werden im allgemeinen in solchen Mengenverhältnissen angewandt, daß der Gewichtsanteil der Summe der Diisocyanate und niedermolekularen Kettenverlängerungsmittel ohne Salzgruppen an der Gesamtmasse des fertigen Polyurethans 10 bis 80, vorzugsweise 10 bis 60% beträgt. Die Präpolymeren weisen nach der Modifizierung mit der ionischen Komponente im allgemeinen Isocyanatgehalte von 0,1 bis 2, vorzugsweise zwischen 0,1 und 1,5 Gew.% auf.

Zur Vernetzung der Präpolymeren werden die in der Polyurethan-Chemie an sich bekannten und üblichen polyfunktionellen Polyisocyanate oder durch Modifizierung der vorgenannten Diisocyanate erhaltene, höherfunktionelle Produkte mit Carbodiimid-, Allophanat-, Biuret-, Urethan- oder Isocyanuratgruppen eingesetzt. Es sind sowohl aromatische als auch (cyclo-)aliphatische Polyisocyanate geeignet, besonders bevorzugt werden jedoch Polyisocyanate mit cycloaliphatisch gebundenen Isocyanat-Gruppen verwendet, wie z. Beispiel isocyanuratmodifiziertes Isophorondiisocyanat, biurat- oder isocyanuratmodifiziertes Hexandiisocyanat.

Die als Vernetzungsmittel eingesetzten polyfunktionellen Polyisocyanate werden in solchen Mengen angewandt, daß das fertige Polyurethan zwischen $10^{-5}$ und $15.10^{-5}$, vorzugsweise zwischen $10^{-5}$ und $10.10^{-5}$ Mol Vernetzungsstellen pro g Polymeres enthält. Die Polyisocyanate können beliebig hohe Funktionalitäten aufweisen, doch werden Funktionalitäten zwischen etwa 2,2 und 4, vorzugsweise um 3 bevorzugt. Zur Einstellung niedriger Funktionalitäten können die höherfunktionellen Polyisocyanate auch mit entsprechenden Diisocyanaten gemischt werden.

Die genaue Einhaltung der Stöchiometrie bel der Vernetzungsreaktion ist nicht kritisch, es hat sich aber als zweckmäßig erwiesen, etwa äquivalente Mengen an Isocyanat-Gruppen des Präpolymeren und des Vernetzungsmittels, d.h. pro Isocyanat-Gruppe des Präpolymeren etwa eine Isocyanat-Gruppe des Vernetzungsmittels einzusetzen. Allgemein können pro Isocyanat-Gruppe des Präpolymeren 0,1 bis 1,5 Isocyanat-Gruppen des Vernetzungsmittels angewandt werden.

Die Herstellung des Polyurethan-Präpolymeren erfolgt in an sich bekannter Weise durch Umsetzen der höhermolekularen Polyhydroxylverbindungen mit den Diisocyanaten und den niedermolekularen Kettenverlängerungsmitteln ohne Salzgruppen in der Schmelze oder gegebenenfalls in Gegenwart eines unter 100°C siedenden und mit Wasser mischbaren, indifferenten organischen Lösungsmittels, gegebenenfalls unter Druck bei Temperaturen zwischen 20 und 120°C, vorzugsweise zwischen 50 und 80°C,

Werden bei der Umsetzung aromatische Diisocyanate in Kombination mit (cyclo)aliphatischen Diisocyanaten eingesetzt, so können diese entweder im Gemisch miteinander oder auch in der genannten Reihenfolge nacheinander mit den höhermolekularen Polyhydroxylverbindungen und gegebenenfalls den niedermolekularen Kettenverlängerungsmitteln ohne Salzgruppen umgesetzt werden. Aufgrund der unterschiedlichen Reaktionsfähigkeit der beiden Diisocyanate ist es häufig ausreichend, die Diisocyanate im Gemisch miteinander einzusetzen. Werden sie nacheinander eingesetzt, ist es wesentlich, zuerst die aromatischen und dann die (cyclo)aliphatischen Diisocyanate einzusetzen, um sicherzustellen, daß das Reaktionsprodukt endständige (cyclo)aliphatische Isocyanatgruppen aufweist. Bei der stufenweise Umsetzung der beiden Diisocyanate ist es nicht wesentlich, vor der Zugabe des (cyclo)aliphatischen Diisocyanats das aromatische Diisocyanat vollständig umzusetzen, sondern das cyclo(aliphatische) Diisocyanat kann häufig bereits zu einem Zeitpunkt zugesetzt werden, zu dem erst ein Teil des aromatischen Diisocyanats abreagiert hat.

Zur Beschleunigung der Umsetzung können die üblichen Katalysatoren, wie tertiäre Amine oder Metallverbindungen, z.B. Triethylamin, Tributylamin, N,N-Dimethyl-cyclohexylamin, N-Methyl-morpholin, N,N-Dimethyl-piperazin, Diazabicyclooctan, Eisen-III-chlorid, Eisenacetylacetonat, Zinndioctoat, Dibutylzinndilaurat und Tetrabutylorthotitanat mitverwendet werden. Die zur vollständigen Umsetzung erforderliche Reaktionszeit richtet sich im wesentlichen nach der Temperatur, den Reaktivitäten der eingesetzten Rohstoffe und dem Katalysator, im allgemeinen sind 1 bis 5 Stunden ausreichend.

Die auf diese Weise erhaltenen Präpolymeren mit endständigen (cyclo)aliphatischen Isocyanatgruppen werden mit mit Wasser mischbaren, zwischen 20 bis 100°C siedenden und unter den gegebenen Reaktionsbedingungen gegenüber Isocyanatgruppen indifferenten Lösungsmitteln, wie Aceton, Tetrahydrofuran oder Metylethylketon verdünnt und bei Temperaturen zwischen 20 und 80°C mit den in Wasser oder organischen Lösungsmitteln gelösten Diaminocarbon- oder -sulfonsäuresalzen versetzt. Die Umsetzung erfolgt sehr rasch unter unwesentlicher Viskositätserhöhung. Im Fall kationischer Dispersionen kann bei Verwendung von N-Methyldiethanolamin dieses, falls gewünscht, zusammen mit den anderen Komponenten eingesetzt werden. Die tertiäre Aminogruppe kann dann mach Abschluß der Präpolymerbildung durch Neutralisation mit Säuren oder Quaternisierung in ein Salz überführt werden.

Die Lösung des Salzgruppen aufweisenden Präpolymeren mit endständigen (cyclo)aliphatischen Isocyanatgruppen wird nun mit dem Vernetzungsmittel gemischt und in die Lösung Wasser eingerührt. Bei der Zugabe von Wasser erfolgt spontan Dispergierung. Die Dispergierung erfolgt gegebenenfalls unter leichtem Überdruck bei Temperaturen zwischen 20 und 80°C. Bei der Zugabe von Wasser reagieren die Isocyanatgruppen des Präpolymeren und die des Vernetzungsmittels mit dem Wasser unter Vernetzung. Die Menge an Wasser liegt dabei im allgemeinen im Bereich von 40 bis 80, vorzugsweise von 50 bis 70 Gew.%,

bezogen auf das Gewicht des Präpolymeren und des Polyisocyanats (Vernetzungsmittels). Anschließend wird das organische Lösungsmittel in üblicher Weise abgedampft.

Das neue Verfahren hat den Vorteil, daß Vernetzungsgrade genau und reproduzierbar eingestellt werden können. Die erhaltenen wäßrigen Polyurethan-Dispersionen sind feinteilig und stabil und können z.B. durch Eindampfen aufkonzentriert werden. Im allgemeinen werden lösungsmittelfreie Lactices mit Festkörpergehalten zwischen 30 und 50 % bevorzugt. Sie können auch bei tropischen Temperaturen mehr als 6 Monate gelagert werden und weisen ein hervorragendes Filmbildevermögen auf. Daraus gebildete Filme haben besonders geringe Temperaturempfindlichkeit und wesentlich höhere Erweichungstemperaturen als vergleichbare lineare Polyurethane. Die Dispersionen können nach üblichen Verfahren zu Filmen, Folien, Überzügen, Beschichtungen, Lackierungen und Imprägnierungen von verschiedenartigen Substraten eingesetzt werden. Sie haften ausgezeichnet auf Leder und Glas und sind elastisch, fest, zäh und widerstandsfähig gegen mechanische Beanspruchungen.

Die erfindungsgemäßen vernetzten Polyurethan-Ionomerdispersionen können mit üblichen Modifizierungs- und Zusatzstoffen kombiniert werden, z.B. mit Stabilisatoren gegen Licht, Hitze oder Verfärbung, Oxidations-, und Hydrolyseschutzmittel, bakteriostatisch wirksamen Substanzen, Fungiziden, Flammschutzmitteln, Weichmachern und Farbstoffen. Sie können ferner auch mit geeigneten Dispersionen aus natürlichen oder synthetischen Polymeren verschnitten werden, z.B. mit wäßrigen Polyacrylat-Dispersionen, Butadien-Styrol-Copolymerisat-Dispersionen und Polyvinylacetat-Dispersionen.

Nähere Angaben über geeignete weitere Modifizierungs- und Zusatzstoffe können beispielsweise der Monographie von J.H. Saunders und K.C. Frisch "High Polymers", Band XVI, Polyurethanes, Teil 1 und 2, Interscience 1962 bzw. 1964 entnommen werden.

**Beispiel 1**

In einem mit Rührer, Thermometer und Vakuumanschluß ausgestatteten Reaktionsgefäß werden 400 g (0,2 Mol) eines handelsüblichen Polyesters aus Adipinsäure, Hexandiol und Neopentylglykol mit einer OH-Zahl von 56 zusammen mit 90,1 g (1 Mol) Butandiol-1,4 sowie 90 g Aceton vorgelegt und nach Zusatz von 0,3 ml Dibutylzinndilaurat mit 180 g (1,033 Mol) eines technischen Isomerengemisches aus 80 % 2,4- und 20 % 2,6-Toluoldiisocyanat (TDI 80) unter Rühren bei 65°C eine Stunde umgesetzt. Anschließend werden 70,44 g (0,317 Mol) Isophorondiisocyanat (IPDI) zugegeben und weitere 4 Stunden bei 75°C gerührt. Das Reaktionsgemisch wird mit 600 g Aceton verdünnt und bei 50°C mit 43 g (0,098 Mol) einer 40 %igen wäßrigen Lösung eines Additionsproduktes von Ethylendiamin an acrylsaures Natrium verserzt. Nach dem Homogenisieren werden 36,4 g IPDI-T 1890 S (trimerisiertes IPDI, NCO-Gehalt 11,95 %, VEBA) zugegeben und 1200 g destilliertes Wasser eingerührt. Das Aceton wird nun abdestilliert. Man erhält eine dünnflüssige, feinteilige Dispersion eines Feststoffgehaltes von 40 %.

Auf Glasplatten aufgezogene Überzüge trocknen bei Raumtemperatur zu klaren, hochglänzenden und sehr zähen Filmen auf, die in organischen Lösungsmitteln nicht löslich sind. Sie weisen folgende mechanische Eigenschaften auf:
Reißfestigkeit (DIN 53 504) 40 N/mm$^2$
Reißdehnung (DIN 53 504) 370 %
Weiterreißfestigkeit (DIN 53 515) 55 N/mm
Zur Beurteilung der Erweichungstemperatur wird ein Streifen des Films auf eine Kofler-Heizbank gelegt und die Temperatur bestimmt, bei der der Film zu kleben beginnt. Die so ermittelte Erweichungstemperatur beträgt 162°C.

Gegenüber dem nachfolgend beschriebenen unvernetzten Überzug des Vergleichsversuches 1 werden somit durch die erfindungsgemäße Umsetzung um rund 80°C höhere Erweichungstemperaturen und bessere Lösungsmittelbeständigkeiten erhalten.

**Vergleichsversuch 1**

Nach den Angaben in Beispiel 1 wird eine Polyurethan-Dispersion mit folgenden Zusatzstoffen hergestellt:
400 g (0,1788 Mol) des bei Beispiel 1 eingesetzten Polyesters aus Adipinsäure, Hexandiol und Neopentylglykol
90,1 g (1 Mol) Butandiol-1,4,
183,9 g (1,056 Mol) TDI 80
44,5 g (0,2 Mol) IPDI
39,4 g (0,09 Mol) der in Belspiel 1 angegebenen 1/1-Additionsverbindung aus Ethylendiamin und Na-Acrylat (als 40 %ige Lösung).
Auf Glasplatten aufgezogene und bei Raumtemperatur getrocknete Filme aus der Vergleichsdispersion weisen folgende Eigenschaften auf:
Reißfestigkeit (DIN 53 504) 45 N/mm$^2$

Reißdehnung (DIN 53 504) 520 %
Weiterreißfestigkeit (DIN 53 515) 52 N/mm
Die auf der Kofler-Heizbank ermittelte Erweichungstemperatur (Beginn des Klebens) liegt bei 85° C.

**Beispiel 2**

Wie in Beispiel 1 angegeben, wird eine Polyurethan-Dispersion aus folgenden Einsatzstoffen hergestellt:
400 g (0,2 Mol) des in Beispiel 1 genannten Polyesters aus Adipinsäure, Hexandiol und Neopentylglykol
90,1 g (1 Mol) Butandiol-1,4
173 g (0,993 Mol) TDI 80
87,4 g (0,393 Mol) IPDI
43 g (0,098 Mol) der in Beispiel 1 genannten 1/1-Additionsverbindung aus Ethylendiamin und Na-Acrylat (als 40-%ige Lösung)
61,7 g IPDI-T 1890 S (Handelsprodukt VEBA, isocyanuratmodifiziertes IPDI, NCO-Gehalt 11,95 %)
Die aus der erhaltenen Dispersion hergestellten Filme weisen folgende Eigenschaften auf:
Reißfestigkeit 40,5 N/mm$^2$
Reißdehnung 340 %
Weiterreißfestigkeit 62 N/mm
Die auf der Kofler-Bank ermittelte Erweichungstemperatur liegt bei 180° C.

**Beispiel 3**

Nach den Angaben in Beispiel 1 wird eine Polyurethan-Ionomer-Dispersion aus folgenden Einsatzstoffen hergestellt:
411 g (0,2 Mol) eines handelsüblichen Polyesters aus Adipinsäure, Ethylenglykol und Butandiol mit der OH-Zahl 55
36 g (0,4 Mol) Butandiol-1,4
85 g (0,488 Mol) TDI 80
47,3 g (0,213 Mol) IPDI
31,5 g (0,072 Mol) der 1/1-Additionsverbindung aus Ethylendiamin und Na-Acrylat
10,1 g IPDI-T 1890 S.
Auf Glasplatten aufgezogene Filme aus der Dispersion weisen folgende Eigenschaften auf:
Reißfestigkeit 28 N/mm$^2$
Reißdehnung 620 %
Weiterreißfestigkeit 28 N/mm
Erweichungstemperatur (Kofler-Bank) 145° C.

**Beispiel 4**

Wie in Beispiel 1 angegeben, wird eine Dispersion aus folgenden Einsatzstoffen hergestellt:
617 g (0,275 Mol) eines handelsüblichen Polyesters aus Adipinsäure, Hexandiol und Neopentylglykol
49,5 g (0,55 Mol) Butandiol-1,4
128,6 g (0,738 Mol) TDI 80
49,2 g (0,22 Mol) IPDI
39,4 g (0,09 Mol) der in Beispiel 1 angegebenen 1/1-Additionsverbindung Ethylendiamin/Na-Acrylat (als 40 %ige Lösung)
16,8 g trimerisiertes Hexamethylendiisocyanat (NCO-Gehalt 22,1 %).
Auf Glasplatten aufgezogene Filme weisen folgende Eigenschaften auf:
Reißfestigkeit 29 N/mm$^2$
Reißdehnung 610 %
Weiterreißfestigkeit 22 N/mm
Erweichungstemperatur (Kofler-Bank) 153° C

**Beispiel 5**

Das Beispiel 3 wird wiederholt unter Verwendung von 200 g (0,2 Mol) eines handelsüblichen Polytetrahydrofurans mit einem mittleren Molekulargewicht von 1000.

Man erhält eine wäßrige Dispersion, die Filme folgender Eigenschaften ergibt:

Reißfestigkeit 38 N/mm²

Reißdehnung 340 %

Weiterreißfestigkeit 52 N/mm

Erweichungstemperatur (Kofler-Bank) 156°C.

**Patentanspruch**

Verfahren zur Herstellung von wäßrigen Dispersionen von vernetzten Polyurethan-Ionomeren durch Umsetzen von Isocyanat-Gruppen tragenden Präpolymeren mit polyfunktionellen Verbindungen, <u>dadurch gekennzeichnet</u>, daß man Salzgruppen eingebaut enthaltende Polyurethan-Präpolymere mit aliphatisch und/oder cycloaliphatisch gebundenen Isocyanat-Endgruppen in einem mit Wasser mischbaren organischen Lösungsmittel eines Siedepunktes zwischen 20 und 100°C mit polyfunktionellen Polyisocyanaten vermischt, die erhaltene Lösung in Wasser dispergiert und das organische Lösungsmittel abdampft, wobei das polyfunktionelle Polyisocyanat in solcher Menge eingesetzt wird, daß das fertige Polyurethan zwischen $10^{-5}$ und $15 \times 10^{-5}$ Mol Vernetzungsstellen/g Polymere enthält.

**Claim**

A process for the preparation of an aqueous dispersion of a crosslinked polyurethane ionomer by reacting an isocyanate- containing prepolymer with a polyfunctional compound, wherein a polyurethane prepolymer containing salt groups and aliphatically and/or cycloaliphatically bonded terminal isocyanate groups is mixed with a polyfunctional polyisocyanate in a water-miscible organic solvent having a boiling point of from 20 to 100°C, the resulting solution is dispersed in water, and the organic solvent is evaporated off, the polyfunctional polyisocyanate being used in such an amount that the finished polyurethane contains from $10^5$ to $15.10^5$ mole of crosslinking points per g of polymer.

**Revendication**

Procédé de préparation de dispersions aqueuses d'ionomères de polyuréthane réticulés par réaction de prépolymères portant des groupes isocyanate avec des composés polyfonctionnels, caractérisé en ce qu'on mélange des prépolymères de polyuréthane contenant des groupes salins dans leur structure interne et des groupes isocyanate terminaux en liaison aliphatique et/ou cycloaliphatique, dans un solvant organique miscible à l'eau ayant un point d'ébullition entre 20 et 100°C, avec des polyisocyanates polyfonctionnels, on disperse dans l'eau la solution obtenue et on chasse le solvant organique par évaporation, le polyisocyanate polyfonctionnel étant utilisé dans une proportien telle que le polyuréthane fini contienne entre $10^{-5}$ et $15 \times 10^{-5}$ mol de points de réticulation/g de polymère.